# EUROPÄISCHE PATENTANMELDUNG

(11) **EP 2 397 210 A1**
(43) Veröffentlichungstag der Anmeldung: **21.12.2011**
(21) Anmeldenummer: 11004106.8
(22) Anmeldetag: 18.05.2011
(51) Int. Cl.: B01D 46/10, B01D 46/52

(54) **Anordnung mit einem Deckel und einem selbsttragenden Filterelement**

(30) Priorität: 17.06.2010 DE 102010024115
(71) Anmelder: Carl Freudenberg KG, 69469 Weinheim (DE)
(72) Erfinder: Bader, Robert, 69115 Heidelberg (DE); Sampaio, Georges, 34830 Clapiers (FR)

(57) **Zusammenfassung**

Eine Anordnung, bestehend aus einem Deckel (1) und einem Filterelement (2), wobei das Filterelement (2) einen Faltenbalg (3) mit benachbarten Faltenrücken (4) aufweist, wobei der Faltenbalg (3) von Kantenstreifen (5) gesäumt ist, wobei das Filterelement (2) an einer Anlageseite (6) des Deckels (1) dichtend anliegt und wobei das Filterelement (2) mit einer Seite (7) an der Anlageseite (6) festgelegt ist und dabei selbsttragend von der Anlageseite (6) des Deckels (1) abragt, ist im Hinblick auf die Aufgabe, eine Anordnung der eingangs genannten Art derart auszugestalten und weiterzubilden, dass nach kostengünstiger Fertigung eine zuverlässige Fixierung eines Filterelements am Deckel sichergestellt ist, dadurch gekennzeichnet, dass an der Anlageseite (6) Greifmittel (8) angeordnet sind, welche einen Kantenstreifen (5) beidseitig umgreifen, der an der Anlageseite (6) anliegt.

## Beschreibung

### Technisches Gebiet

Die Erfindung betrifft eine Anordnung gemäß dem Oberbegriff des Patentanspruchs 1.

### Stand der Technik

Aus der DE 20 2008 010 474 U1 ist bereits ein Deckel bekannt, von dem Widerhakenbefestigungselemente abragen.

Die US 3,789,589 offenbart ein Filterelement, dessen beidseitig letzten Faltenwände mit einem Verstärkungsstreifen umschlagen sind, wobei die letzten Faltenwände nebst Verstärkungsstreifen in eine U-förmige Nut eingepresst sind.

In der DE 101 23 969 C1 ist eine Anordnung mit einem Deckel offenbart, von welchem orthogonal in Richtung des Filterelements Führungsschienen abragen. Die Führungsschienen verlaufen parallel zu den mit Kantenstreifen gesäumten Längsseiten des Filterelements. Dabei sind die Faltenrücken orthogonal zu den Längsseiten orientiert. In eine Falte des Faltenbalgs greift ein vom Deckel ebenfalls abragendes Schwert ein. Die Faltenrücken verlaufen parallel zur Anlageseite des Deckels.

Bei der gattungsbildenden Anordnung ist nachteilig, dass das Filterelement störende Geräusche verursachen kann. Das in den Führungsschienen des Deckels gelagerte Filterelement kann nämlich wackeln. Im schlimmsten Fall kann das Filterelement sogar aus dem Deckel herausfallen und Verdampfer und/ oder Gebläse in Kraftfahrzeugen blockieren. Des Weiteren kann ein gelockertes Filterelement Leckagen verursachen.

### Darstellung der Erfindung

Der Erfindung liegt daher die Aufgabe zugrunde, eine Anordnung der eingangs genannten Art derart auszugestalten und weiterzubilden, dass nach kostengünstiger Fertigung eine zuverlässige Fixierung eines Filterelements am Deckel sichergestellt ist.

Die vorliegende Erfindung löst die vorgenannte Aufgabe durch die Merkmale des Patentanspruchs 1.

Erfindungsgemäß sind an der Anlageseite Greifmittel angeordnet, welche einen Kantenstreifen beidseitig umgreifen, der an der Anlageseite flächig anliegt und zu dieser parallel orientiert ist. Durch diese konkrete Ausgestaltung kann ein ohnehin bei den meisten marktüblichen Filterelementen vorhandener Kantenstreifen genutzt werden, um das Filterelement zu fixieren. Dabei ist konkret erkannt worden, dass das Filterelement durch einen Schiebevorgang mit dem Deckel verbunden werden kann. Weiter ist erkannt worden, dass die Anordnung keine Führungselemente aufweisen muss, die in orthogonaler Richtung vom Deckel und/ oder der Anlageseite abragen. Es können daher kostengünstige Filterelemente aus Vliesstoff oder textilen Stoffen ohne die Ausbildung verstärkender Kunststoffelemente am Deckel verwendet werden. Erfindungsgemäß ist konkret erkannt worden, dass die Eigenstabilität eines Filterelements mit einem Faltenbalg aus Vliesstoff und verleimten oder verschweissten starren oder flexiblen Kantenstreifen ausreicht, um dieses in den Schacht eines Filtergehäuses einzuführen. Das Filterelement verbiegt sich überraschend nicht in der Weise, dass es nicht mehr in einen Schacht einführbar ist. Vielmehr ragt das Filterelement überraschend mit hoher Steife vom Deckel derart ab, dass ein Monteur das Filterelement nur durch Halten des Deckels in einen Schacht eines Filtergehäuses einführen kann, Dabei kann das Filterelement überraschend problemlos in Schienen innerhalb des Schachts eingespurt werden. Der Deckel kann nach Einführen des Filterelements in den Schacht dessen Öffnung dichtend verschließen. Durch den Verzicht auf einen Rahmen, der das Filterelement spritzgusstechnisch mit dem Deckel verbindet, kann eine Anordnung kostengünstig gefertigt werden. Durch diese Anordnung ist eine zuverlässige Fixierung eines Filterelements am Deckel sichergestellt.

Folglich ist die eingangs genannte Aufgabe gelöst.

Die Greifmittel und der Deckel könnten einstückig ausgebildet sein, wobei die Greifmittel derart ausgebildet sind, dass der Kantenstreifen parallel zur Anlageseite orientiert entlang seiner Längsachse oder Längserstreckung derart seitlich in die Greifmittel einschiebbar ist, dass er nach dem Einschieben an der Anlageseite flächig anliegt. Durch diese konkrete Ausgestaltung können bereits bekannte Filterelemente, die mit einem Kantenstreifen versehen sind, problemlos durch einen Schiebevorgang mit dem Deckel zu einer baulichen Einheit kombiniert werden.

Das Filterelement könnte mit der Anlageseite stoffschlüssig verbunden sein. Hierdurch ist eine verliersichere Anbindung des Filterelements an den Deckel gewährleistet. Dabei ist denkbar, dass das Filterelement mit der Anlageseite verklebt oder verschweisst ist. Vor diesem Hintergrund könnte das Filterelement ausschließlich mit der Anlageseite verklebt sein. Ein Klebstoff erlaubt eine rasche und verliersichere Fixierung des Filterelements am Deckel. Dabei ist auch denkbar, dass das Filterelement außer durch einen Klebstoff zusätzlich durch Greifmittel gehalten wird.

Das Filterelement könnte mit einem Kantenstreifen an der Anlageseite anliegen, wobei die Faltenrücken orthogonal von diesem Kantenstreifen abragen. Durch diese konkrete Ausgestaltung wird ein Verbiegen des Filterelements raffiniert unterdrückt. Die Eigensteifigkeit des Faltenbalgs in Querrichtung, nämlich in Fluchtrichtung der Faltenrücken, wird ausgenutzt, um das Filterelement selbsttragend an der Anlageseite zu fixieren.

Vor diesem Hintergrund könnte der Kantenstreifen die Faltenrücken vorzugsweise beidseitig überragen, wobei ein die Faltenrücken vorzugsweise beidseitig überragender Überstand in die Greifmittel einschiebbar ist. Durch diese konkrete Ausgestaltung kann ein Filterelement derart in den Deckel eingeschoben werden, dass der Kantenstreifen und die Anlageseite parallel zueinander orientiert sind und miteinander fluchten.

Die Greifmittel könnten im Querschnitt L-förmige, zweischenklige Elemente umfassen, die mit einem ersten Schenkel an der Anlageseite festgelegt sind und mit einem orthogonal zum ersten Schenkel orientierten zweiten Schenkel den Kantenstreifen hintergreifen und gegen die Anlageseite drücken. Durch diese konkrete Ausgestaltung wird der Kantenstreifen einerseits verkippungsfrei an der Anlageseite festgelegt und andererseits gleichzeitig komprimiert, da er in einer Nut zwischen zweitem Schenkel und Anlageseite verpresst wird. Die zweischenkligen Elemente sind vorzugsweise an gegenüberliegenden Rändern der Anlageseite angeordnet. Die Elemente sind dabei versetzt zueinander gegenüberliegend angeordnet.

Der Kantenstreifen könnte aus einem komprimierbaren oder deformierbaren Werkstoff bestehen, der durch Kompression oder Deformierung eine dichtende Anlage des Filterelements an der Anlageseite herstellt. Ein deformierbarer Werkstoff kann eine Presspassung und dichtende Anlage realisieren. Vor diesem Hintergrund ist denkbar, dass die Kantenstreifen aus Vliesstoff, Schaumstoff oder textilen Werkstoffen bestehen.

Von der Anlageseite könnte ein Anschlagelement abragen. Das Anschlagelement verhindert, dass ein Filterelement über den Anschlag hinaus geschoben werden kann. Vorzugsweise ist das Anschlagelement an einer Randseite der Anlageseite angeordnet.

Der Deckel könnte eine der Anlageseite abgewandte Blende aufweisen, wobei der Blende ein Griffelement zugeordnet ist. Eine Blende kann eine Öffnung eines Filtergehäuses verschließen. Die Anordnung kann daher als vormontierte Einheit in den Schacht eines Filtergehäuses eingesetzt werden und diesen dichtend verschließen. Dabei kann ein Monteur die Einheit am Griffelement ergreifen.

Ein Deckel, umfassend einen Grundkörper mit einer Anlageseite und einer der Anlageseite abgewandten Blende zum Verschließen eines Filtergehäuses, wobei an der Anlageseite Greifmittel angeordnet sind, löst ebenfalls die eingangs genannte Aufgabe. Ein solcher Deckel kann in einer Anordnung der zuvor beschriebenen Art verwendet werden.

Das hier beschriebene Filterelement eignet sich in besonderer Weise zur Verwendung als Kraftfahrzeuginnenraumfilter, da es bauraumoptimiert eine hohe Filtereffzienz zeigt. Mit dem hier beschriebenen Filterelement können nicht nur Partikel gefiltert, sondern auch unangenehme Gerüche adsorbiert werden. Das hier beschriebene Filterelement eignet sich für moderne Kraftfahrzeuge, in denen nur sehr enge Bauräume zur Aufnahme von Filterelementen zur Verfügung stehen.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: ein Filterelement, welches in einen Deckel eingeschoben wird, um von diesem selbsttragend abzuragen,
- Fig. 2: den Deckel gemäß Fig. 1 und
- Fig. 3: eine schematische Ansicht der gemäß Fig. 1 montierten Anordnung.

### Ausführung der Erfindung

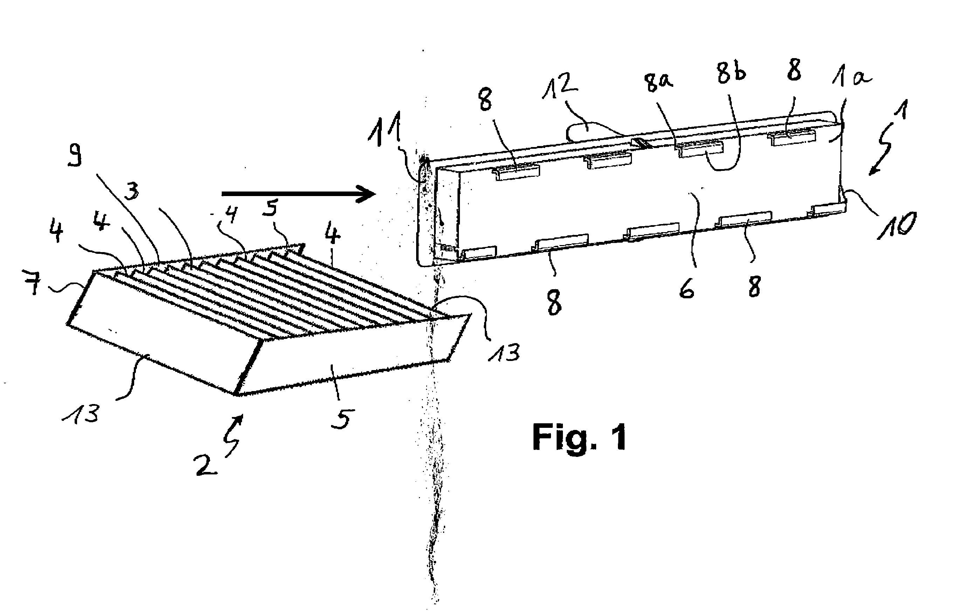

Fig. 1 zeigt die Montage einer Anordnung, bestehend aus einem Deckel 1 und einem Filterelement 2, wobei das Filterelement 2 einen Faltenbalg 3 mit benachbarten Faltenrücken 4 aufweist, wobei der Faltenbalg 3 von Kantenstreifen 5 gesäumt ist, wobei das Filterelement 2 an einer Anlageseite 6 des Deckels 1 dichtend anliegt und wobei das Filterelement 2 mit einer Seite 7 an der Anlageseite 1 festgelegt ist und dabei selbsttragend von der Anlageseite 6 des Deckels 1 abragt.

An der Anlageseite 6 sind Greifmittel 8 angeordnet sind, welche einen Kantenstreifen 5 beidseitig umgreifen, der an der Anlageseite 6 zum Anliegen kommt.

Die Greifmittel 8 und der Deckel 1 sind einstückig ausgebildet. Die Greifmittel 8 sind derart ausgebildet, dass der Kantenstreifen 5 parallel zur Anlageseite 6 orientiert entlang seiner Längsachse oder Längserstreckung (Pfeilrichtung) derart seitlich in die Greifmittel 8 einschiebbar ist, dass er nach dem Einschieben an der Anlageseite 6 flächig anliegt.

Das Filterelement 2 kann dabei mit der Anlageseite 6 verklebt sein. Das Filterelement 2 liegt mit einem Kantenstreifen 5 an der Anlageseite 6 an, wobei die Faltenrücken 4 orthogonal von diesem Kantenstreifen 5 abragen.

An der Anlageseite 6 sind Greifmittel 8 angeordnet, welche den Kantenstreifen 5 beidseitig umgreifen, der an der Anlageseite 6 anliegt. Der Kantenstreifen 5 überragt die Faltenrücken 4, wobei ein die Faltenrücken 4 überragender Überstand 9 in die Greifmittel 8 einschiebbar ist.

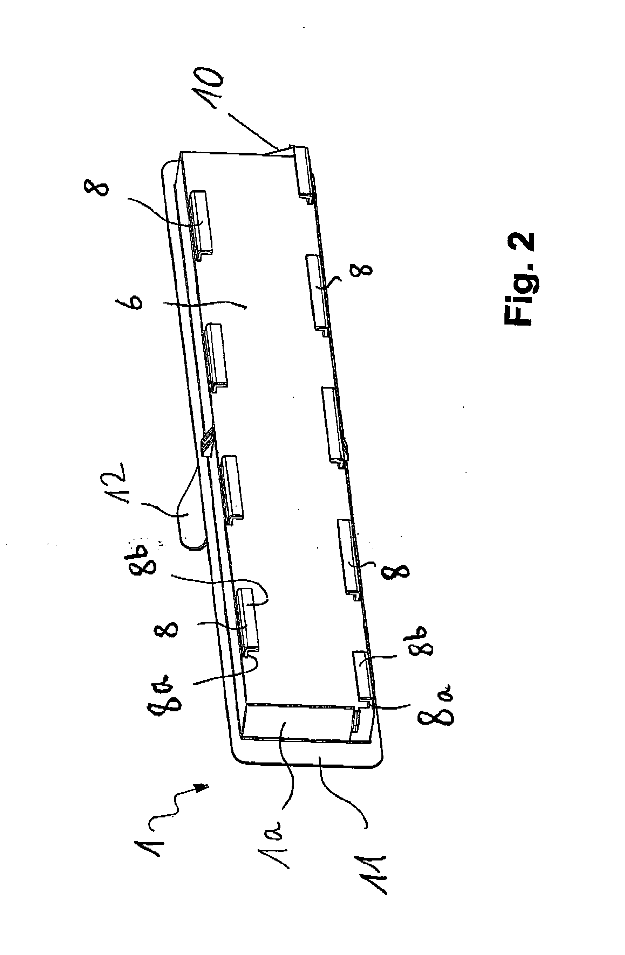

Fig. 2 zeigt, dass die Greifmittel 8 im Querschnitt L-förmige, zweischenklige Elemente umfassen, die mit einem ersten Schenkel 8a an der Anlageseite 6 festgelegt sind und mit einem orthogonal zum ersten Schenkel 8a orientierten zweiten Schenkel 8b den Kantenstreifen 5 hintergreifen und gegen die Anlageseite 6 drücken.

Der Kantenstreifen 5 besteht aus einem komprimierbaren oder deformierbaren Werkstoff, der durch Kompression oder Deformierung eine dichtende Anlage des Filterelements 2 an der Anlageseite 6 herstellt. Konkret besteht der Kantenstreifen 5 aus einem Vliesstoff und besteht der Faltenbalg 3 aus einem Vliesstoff. Die Kantenstreifen 5 können mit dem Faltenbalg 3 verschweisst oder verklebt sein.

Von der Anlageseite 6 ragt einseitig ein Anschlagelement 10 ab. Das Anschlagelement 10 ist dreieckförmig ausgebildet und ist an einer Randseite, nämlich einer Querseite, der Anlagseite 6 angeordnet. Die Greifmittel 8 sind einander versetzt gegenüberliegend jeweils an den Längsseiten der Anlageseite 6 angeordnet.

Der Deckel 1 weist eine der Anlageseite 6 abgewandte Blende 11 auf, wobei der Blende 11 ein Griffelement 12 zugeordnet ist. Der Deckel 1 ist aus einem Kunststoff gefertigt. Durch die Greifmittel 8 kann der Deckel 1 vom Filterelement 2 zerstörungsfrei gelöst und wiederverwertet werden.

Die jeweils letzte Endfalte 13 des Faltenbalgs 3 kann konvex nach außen gewölbt sein, um eine dichte Anlage an einer Wand des Filtergehäuses sicherzustellen. Denkbar ist jedoch auch, dass statt gewölbten Endfalten 13 starre oder flexible Kantenstreifen vorgesehen sind, die mit Dichtmitteln versehen sind.

Auch dem Kantenstreifen 5, welche der Anlageseite 6 abgewandt ist, können Dichtmittel zugeordnet sein, um am Grund des Schachts dichtend anzuliegen. Vorzugsweise kann hier eine V-förmig abragende Lasche angeordnet sein.

Fig. 2 zeigt einen Deckel 1 zur Verwendung in einer Anordnung gemäß Fig. 1, umfassend einen Grundkörper 1 a mit einer Anlageseite 6 und einer der Anlageseite 6 abgewandten Blende 11 zum Verschließen eines nicht gezeigten Filtergehäuses, wobei an der Anlageseite 6 Greifmittel 8 angeordnet sind. Der Blende 11 können umlaufende, nicht gezeigte Dichtungsmittel zugeordnet sein.

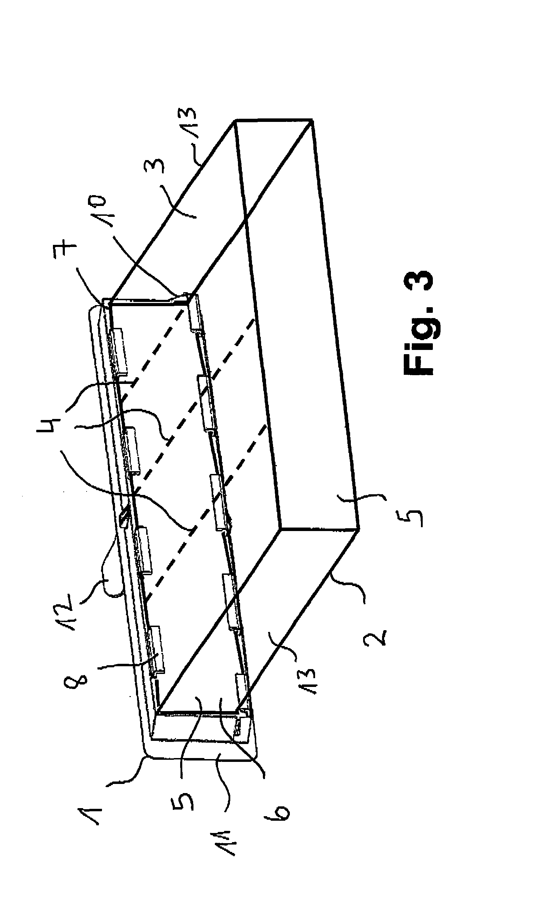

Fig. 3 zeigt die gemäß Fig. 1 fertig montierte Anordnung, bestehend aus einem Deckel 1 und einem Filterelement 2, wobei das Filterelement 2 einen Faltenbalg 3 mit benachbarten Faltenrücken 4 aufweist, wobei der Faltenbalg 3 von Kantenstreifen 5 gesäumt ist und wobei das Filterelement 2 an einer Anlageseite 6 des Deckels 1 dichtend anliegt. Das Filterelement 2 ist mit einer Seite 7 an der Anlageseite 6 festgelegt und ragt dabei selbsttragend von der Anlageseite 6 des Deckels 1 ab. Der Übersichtlichkeit halber ist das Filterelement 2 transparent dargestellt.

An der Anlageseite 6 sind Greifmittel 8 angeordnet, welche einen Kantenstreifen 5 beidseitig umgreifen, der an der Anlageseite 6 anliegt.

Die Greifmittel 8 und der Deckel 1 sind einstückig ausgebildet, wobei die Greifmittel 8 derart ausgebildet sind, dass der Kantenstreifen 5 parallel zur Anlageseite 6 orientiert entlang seiner Längsachse derart seitlich in die Greifmittel 8 einschiebbar ist, dass er nach dem Einschieben an der Anlageseite 6 flächig anliegt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Anordnung, bestehend aus einem Deckel (1) und einem Filterelement (2), wobei das Filterelement (2) einen Faltenbalg (3) mit benachbarten Faltenrücken (4) aufweist, wobei der Faltenbalg (3) von Kantenstreifen (5) gesäumt ist, wobei das Filterelement (2) an einer Anlageseite (6) des Deckels (1) dichtend anliegt und wobei das Filterelement (2) mit einer Seite (7) an der Anlageseite (6) festgelegt ist und dabei selbsttragend von der Anlageseite (6) des Deckels (1) abragt,
**dadurch gekennzeichnet, dass**
an der Anlageseite (6) Greifmittel (8) angeordnet sind, welche einen Kantenstreifen (5) beidseitig umgreifen, der an der Anlageseite (6) anliegt.

2. Anordnung nach Anspruch 1, **dadurch gekennzeichnet, dass** die Greifmittel (8) und der Deckel (1) einstückig ausgebildet sind, wobei die Greifmittel (8) derart ausgebildet sind, dass der Kantenstreifen (5) parallel zur Anlageseite (6) orientiert entlang seiner Längsachse derart seitlich in die Greifmittel (8) einschiebbar ist, dass er nach dem Einschieben an der Anlageseite (6) flächig anliegt.

3. Anordnung nach Anspruch 1 oder 2, **dadurch gekennzeichnet, dass** das Filterelement (2) mit der Anlageseite (6) stoffschlüssig verbunden ist.

4. Anordnung nach einem der Ansprüche 1 bis 3, **dadurch gekennzeichnet, dass** das Filterelement (2) mit einem Kantenstreifen (5) an der Anlageseite (6) anliegt, wobei die Faltenrücken (4) orthogonal von diesem Kantenstreifen (5) abragen.

5. Anordnung nach einem der Ansprüche 1 bis 4, **dadurch gekennzeichnet, dass** der Kantenstreifen (5) die Faltenrücken (4) überragt, wobei ein die Faltenrücken (4) überragender Überstand (9) in die Greifmittel (8) einschiebbar ist.

6. Anordnung nach einem der Ansprüche 1 bis 5, **dadurch gekennzeichnet, dass** die Greifmittel (8) im Querschnitt L-förmige, zweischenklige Elemente umfassen, die mit einem ersten Schenkel (8a) an der Anlageseite (6) festgelegt sind und mit einem orthogonal zum ersten Schenkel (8a) orientierten zweiten Schenkel (8b) den Kantenstreifen (5) hintergreifen und gegen die Anlageseite (6) drücken.

7. Anordnung nach einem der Ansprüche 1 bis 6, **dadurch gekennzeichnet, dass** der Kantenstreifen (5) aus einem komprimierbaren oder deformierbaren Werkstoff besteht, der durch Kompression oder Deformierung eine dichtende Anlage des Filterelements (2) an der Anlageseite (6) herstellt.

8. Anordnung nach einem der Ansprüche 1 bis 7, **dadurch gekennzeichnet, dass** von der Anlageseite (6) einseitig ein Anschlagelement (10) abragt.

9. Anordnung nach einem der Ansprüche 1 bis 8, **dadurch gekennzeichnet, dass** der Deckel (1) eine der Anlageseite (6) abgewandte Blende (8) aufweist, wobei der Blende (8) ein Griffelement (12) zugeordnet ist.

10. Deckel (1) zur Verwendung in einer Anordnung nach einem der voranstehenden Ansprüche, umfassend einen Grundkörper (1 a) mit einer Anlageseite (6) und einer der Anlageseite (6) abgewandten Blende (11) zum Verschließen eines Filtergehäuses, wobei an der Anlageseite (6) Greifmittel (8) angeordnet sind.
